**Europäisches Patentamt**

**European Patent Office**

**Office européen des brevets**

(19)

(11) **EP 1 336 424 A1**

(12) **EUROPÄISCHE PATENTANMELDUNG**

(43) Veröffentlichungstag:
**20.08.2003 Patentblatt 2003/34**

(51) Int Cl.⁷: **A63B 24/00**, G06F 3/00,
A63B 21/00

(21) Anmeldenummer: **03003091.0**

(22) Anmeldetag: **13.02.2003**

(84) Benannte Vertragsstaaten:
**AT BE BG CH CY CZ DE DK EE ES FI FR GB GR
HU IE IT LI LU MC NL PT SE SI SK TR**
Benannte Erstreckungsstaaten:
**AL LT LV MK RO**

(30) Priorität: **13.02.2002 DE 20202667 U
21.11.2002 DE 20218051 U**

(71) Anmelder:
• **Zillig, Freya
21465 Reinbek (DE)**

• **Zillig, Bodo
21465 Reinbek (DE)**

(72) Erfinder:
• **Zillig, Freya
21465 Reinbek (DE)**
• **Zillig, Bodo
21465 Reinbek (DE)**

(74) Vertreter: **Stenger, Watzke & Ring Patentanwälte
Kaiser-Friedrich-Ring 70
40547 Düsseldorf (DE)**

(54) **Vorrichtung zur Signalübertragung**

(57) Die Erfindung betrifft eine Vorrichtung zur Signalübertragung von einem physikalische Betriebszustände erfassenden Signalgeber zu einem hiervon separat angeordneten Signalempfänger. Um eine Vorrichtung zu schaffen, mittels der dem Spieler eines PC- oder Videospiels ein interaktiver Eingriff in den Spieleablauf möglich ist und die zudem steuerungskompatibel zu allen handelsüblichen Videospiel-Konsolen und PC's ist, wird mit der Erfindung vorgeschlagen eine Vorrichtung zur Signalübertragung, die gekennzeichnet ist durch eine elektronische Schaltung, die an den Signalgeber einerseits und den Signalempfänger andererseits angeschlossen ist und mittels der die vom Signalgeber erzeugten Signale in die vom Signalempfänger geforderte Signalstruktur überführbar sind, wobei der Signalgeber zur Erfassung mindestens eines physikalischen Betriebszustandes an einem Heimtrainer angeschlossen ist und wobei als Signalempfänger ein PC oder eine Videospiel-Konsole vorgesehen ist.

Fig.9

EP 1 336 424 A1

**Beschreibung**

Die Erfindung betrifft eine Vorrichtung zur Signalübertragung von einem physikalische Betriebszustände erfassenden Signalgeber zu einem hiervon separat angeordneten Signalempfänger.

Vorrichtungen der vorbekannten Art sind aus dem Stand der Technik beispielsweise für die Steuerung von PC- oder Videospielen bekannt. Verwendet werden hier sogenannte Joysticks, Gamepads, PSX-Controller oder dergleichen, die an den PC oder die Videokonsole direkt angeschlossen sind und über die der Spieler entsprechende Eingriffs- oder Lenkmöglichkeiten erhält. Bewegungen am Joystick, Gamepad oder PSX-Controller werden in entsprechende elektrische Signale umgewandelt und als digitale Information an den PC oder die Videokonsole übermittelt. Dort werden die eintreffenden Informationssignale aufgeschlüsselt und in korrespondierende Bewegungen der im Videospiel dargestellten Figuren umgewandelt.

All den vorgenannten Signalgebern ist jedoch gemein, daß der Mensch an sich nicht in das Spiel aktiv mit einbezogen wird, sondern vielmehr als externer, passiver Teilnehmer ausgeschlossen bleibt und lediglich über die Bewegung des Joysticks, Gamepads oder PSX-Controllers eine Bewegung innerhalb des PCoder Videospiels bewirken kann.

Von Nachteil ist ferner, daß die PC- oder Videospiel-Konsolen zueinander nicht kompatibel sind. Von daher ist es auch nicht möglich, ein und denselben Joystick, Gamepad oder PSX-Controller an unterschiedliche Videospiel-Konsolen oder den PC anzuschließen. Derzeit häufig verwendete Videospiel-Konsolen sind die X-Box von Microsoft, die Playstation von Sony und der Gamecube von Nintendo. All diese Videospiel-Konsolen verfügen über eigene Steckersysteme für den Anschluß entsprechender Steuergeräte wie auch über eine jeweils unterschiedliche Elektronik, so daß auch bei einer Zwischenschaltung eines Steckadapters zwischen Spielekonsole einerseits und Steuergerät andererseits, die Verwendung ein und desselben Steuergeräts für die vorgenannten Spielkonsolen nicht möglich ist. Zudem unterscheiden sich die Schaltelektronik sowie die Anschlüsse der Videospiel-Konsolen auch zu denen von handelsüblichen PC's, beispielsweise IBM-kompatiblen PC's, so daß auch zwischen diesen eine Kompatibilität nicht gegeben ist.

Vom Vorgenannten ausgehend ist es **Aufgabe** der Erfindung, eine Vorrichtung zur Signalübertragung zu schaffen, mittels der dem Spieler eines PCoder Videospiels ein interaktiver Eingriff in den Spieleablauf möglich ist und die zudem steuerungskompatibel zu allen handelsüblichen Videospiel-Konsolen und PC's ist.

**Gelöst** wird diese Aufgabe durch eine Vorrichtung zur Signalübertragung, die gekennzeichnet ist durch eine elektronische Schaltung, die an den Signalgeber einerseits und den Signalempfänger andererseits angeschlossen ist und mittels der die vom Signalgeber erzeugten Signale in die vom Signalempfänger geforderte Signalstruktur überführbar sind, wobei der Signalgeber zur Erfassung mindestens eines physikalischen Betriebszustandes an einem Heimtrainer angeschlossen ist und wobei als Signalempfänger ein PC oder eine Videospiel-Konsole vorgesehen ist.

Von Vorteil der erfindungsgemäßen Vorrichtung ist zum einen die Anschlußmöglichkeit an alle handelsüblichen Videospiel-Konsolen und PC's. Erreicht wird dies durch die elektronische Schaltung, die an den Signalempfänger, beispielsweise die Videospiel-Konsole oder den PC, anzuschließen ist und mittels der die an den Signalempfänger zu sendenden Signale in Abhängigkeit von der vom jeweils angeschlossenen Signalempfänger geforderten Signalstruktur moduliert werden. Unabhängigkeit sowohl vom Signalgeber als auch vom Signalempfänger stellt die erfindungsgemäße Vorrichtung mithin eine systemunabhängige Schnittstelle dar, die eine Kompatibilitätsanpassung von Signalgeber einerseits und Signalempfänger andererseits ermöglicht und so die kommunikationstechnische Verbindung an sich nicht kompatibler Signalempfänger und Signalgeber ermöglicht.

Ein weiterer Vorteil der erfindungsgemäßen Vorrichtung ist die Möglichkeit des Einsatzes von Signalgebern, die beispielsweise als integraler Bestandteil eines Heimtrainers zur Verfügung stehen. Der Einsatz solcher Signalgeber ermöglicht nämlich dem Spieler auf sehr einfache und insbesondere kostengünstige Art und Weise die interaktive Ankopplung an das von ihm zu spielende Video- oder PC-Spiel. In Abhängigkeit des verwendeten Heimtrainers kann so durch entsprechende sportliche Aktivität der sportliche Einsatz des Spielers dazu verwandt werden, um eine Steuerung des Video- oder PC-Spieles vorzunehmen. Unter Verwendung der entsprechenden Elektronik erlaubt es dabei die erfindungsgemäße Vorrichtung, einen Heimtrainer an sämtliche handelsübliche Videospiel-Konsolen oder PC's anzuschließen, so daß in Bezug auf den Signalempfänger keinerlei Beschränkungen hinsichtlich der Verwendung der erfindungsgemäßen Vorrichtung auferlegt sind.

Heimtrainer als solche sind aus dem Stand der Technik in vielerlei Ausgestaltungsformen bekannt. Sie bieten ihrem jeweiligen Anwender auf einfache Weise die Möglichkeit, sich sportlich aktiv zu halten. Zur Überprüfung der körperlichen Verfassung sowie zur Motivationssteigerung verfügen handelsübliche Heimtrainer in der Regel über Leistungsanzeigen, die es dem Anwender erlauben, die erzielten sportlichen Leistungen statistisch auszuwerten oder grafisch anzeigen zu lassen. So ist es beispielsweise bei einem Heimtrainer-Fahrrad bekannt, die während einer Benutzung eines Gerätes erzeugte Geschwindigkeit und virtuell zurückgelegte Strecke zu erfassen. Auf diese Weise kann der Anwender ein gezielt ausgerichtetes Trainingsprogramm absolvieren, bei welchem es beispielsweise darauf ankommt, in bestimmten Zeitintervallen bestimmte Geschwindigkeiten zu erreichen und diese über eine vorgegebene Zeitdauer einzuhalten. Manche Heimtrainer bieten darüber hinaus die Möglichkeit des Pulsmessens an, so daß über eine Kombination der erzielten sportlichen Werte einerseits und der den körperlichen Zustand anzeigenden Werte andererseits Rückschlüsse auf Kondition, Fettverbrennung und dergleichen gezogen werden können. Für die Durchführung einer solchen Kalkulation bzw. für die statistische Auswertung der gemessenen Daten verfügen handelsübliche Heimtrainer über heimtrainereigene Computer und daran angeschlossene Displays, die vom jeweiligen Benutzer des Heimtrainers auch während einer Trainingsübung eingesehen werden können.

Trotz der vorbeschriebenen Ausrüstung handelsüblicher Heimtrainer ist der Einsatz solcher Geräte auf die Dauer sehr monoton, was in nachteiliger Weise zu Motivationsschwankungen beim jeweiligen Anwender führt. Um diesem Problem zu begegnen, ist es aus dem Stand der Technik bekannt, Heimtrainer-Systeme anzubieten, die neben dem eigentlichen Heimtrainer über weitere Informations- bzw. Unterhaltungskomponenten verfügen. Beispielhaft genannt seien Heimtrainer nach Art eines Rudergeräts, die an eine große Leinwand angeschlossen dem jeweiligen Anwender den Eindruck vermitteln, als würde er sich tatsächlich in dem auf der angeschlossenen Leinwand gezeigten Boot befinden und die von ihm auf dem Rudergerät ausgeführten Ruderschläge würden das auf der Leinwand gezeigte Boot nach vorne treiben. Bekannt sind derlei Systeme auch im Bereich des Golfsports, wobei hier einem Flugsimulator gleich der Anwender auf einen real existierenden Ball einschlagen kann, wobei die im Treffmoment von entsprechenden Sensoren erfaßten Daten über Beschleunigung und Geschwindigkeit in einen nur imaginär existierenden Ball umgesetzt werden, dessen Flugbahn dann auf einer dafür vorgesehenen Leinwand angezeigt wird.

Derlei vorbeschriebene Systeme vermögen eine weit höhere Motivation beim jeweiligen Anwender zu wecken, weisen jedoch den entscheidenden Nachteil auf, daß sie in der Anschaffung sehr kostenintensiv sind und sich mithin insbesondere für den Privathaushalt kaum eignen. Zudem ist für die Unterbringung solcher Geräte ein gewisser Raumbedarf erforderlich, was häufig auch die Grenzen gewerblich betriebener Fitness-Studios übersteigt.

Die oben beschriebenen Nachteile werden durch die erfindungsgemäße Vorrichtung überwunden. Diese erlaubt nämlich die Verbindung von Heimtrainer einerseits und Videospiel-Konsole andererseits, wodurch dem Verwender des Heimtrainers die Möglichkeit eröffnet wird, unter Aufbringung eigener Muskelkraft ein Videospiel interaktiv zu steuern. Zum einen ist hierdurch die Attraktivität des Heimtrainers gesteigert, denn wird die sonst vorherrschende Monotonie bei der Verwendung eines solchen Gerätes überwunden, zum anderen stellt die Steuerung eines Videospiels durch das Aufbringen eigener Muskelkraft eine das Spielvergnügen insgesamt steigernde interaktive Komponente dar. Dabei ist insbesondere von Vorteil, dass unter Verwendung der erfindungsgemäßen Vorrichtung bereits bestehende Heimtrainer nachgerüstet und in kommunikationstechnische Verbindung mit herkömmlichen Videospiel-Konsolen oder PCs gebracht werden können. Der Nachrüstaufwand ist dankbar einfach und auch fordert die erfindungsgemäße Vorrichtung selbst keinen zusätzlichen Raumbedarf, so dass eine Verwendung der erfindungsgemäßen Vorrichtung auch auf engstem Raume möglich ist.

Heimtrainer der vorbekannten Art, wie beispielsweise fahrradähnliche Heimtrainer, elliptische Heimtrainer, Laufbänder, Rudergeräte und dergleichen, nehmen zumeist über einen magnetischen Kontakt, der im Falle des fahrradähnlichen Heimtrainers beispielsweise am Tretlager des Schwungrades angeordnet sein kann, Meßimpulse auf, die in Abhängigkeit der Drehgeschwindigkeit des Schwungrades in unterschiedlicher Zeitfolge an einen Trainingscomputer übermittelt werden. Aus diesen Zeitintervallen kann der Trainingscomputer dann Informationen, wie beispielsweise Zeit, Distanz, Geschwindigkeit, Kalorienverbrauch oder dergleichen berechnen und diese Informationen in einem am Heimtrainer angeordneten Display anzeigen.

Gemäß einem besonderen Vorschlag der Vorrichtung wird dieses vom Heimtrainer generierte und an den Trainingscomputer des Heimtrainers gesandte Signal abgezweigt und der erfindungsgemäß vorgesehenen elektrischen Schaltung der Vorrichtung zugeführt. Erreicht werden kann dies beispielsweise durch eine Y-Weiche, so daß der am Heimtrainer angeordnete Signalgeber ein Signal sowohl weiterhin an den Trainingscomputer als auch an die elektronische Schaltung der erfindungsgemäßen Vorrichtung liefert. Innerhalb der elektronischen Schaltung wird dann dieses vom Signalgeber des Heimtrainers gesandte Signal entsprechend der vom jeweils angeschlossenen Signalempfänger geforderten Signalstruktur ummoduliert und an diesen gesandt. In der elektronischen Schaltung der erfindungsgemäßen Vorrichtung erfolgt mithin eine Umsetzung des am Heimtrainer gemessenen Impulses in eine digitale Information, welche dann dem Signalempfänger übermittelt und beispielsweise der Steuerung eines Video- oder PC-Spiels dient. Insbesondere eignen sich hierbei Video- oder PC-Spiele, bei denen eine geschwindigkeitsabhängige Steuerung, beispielsweise zur Steuerung eines Autos, eines Fahrrades oder dergleichen zu erfolgen hat, so daß in Abhängigkeit der auf dem Heimtrainer erzeugten Geschwindigkeit eine korrespondierende Vorwärtsbewegung im Video- oder PC-Spiel erzeugt wird. In vorteilhafter Weise wird dabei die Geschwindigkeitskurve von langsam bis schnell des Heimtrainers auf eine zweite Kurve mit einem größeren Intervall abgebildet, so daß eine parallele Steigerung der Geschwindigkeiten stattfindet. Je schneller der Heimtrainer läuft, desto schneller erscheint auch die Geschwindigkeit im Spiel und umgekehrt. Für die Übertragung der Geschwindigkeiten wird vorzugsweise ein verschobenes Intervall verwendet, damit der Heimtrainer im virtuellen Effekt auch hohe Geschwindigkeiten erreichen kann, je nach eingestelltem Spiel.

Die übrigen, für eine Steuerung eines Video- oder PC-Spieles erforderlichen Eingabebefehle kann der Spieler über wenigstens eine zusätzliche Signaleingabeeinheit vornehmen. Eine solche Signaleingabeeinheit weist eine Mehrzahl von Funktionstasten auf und ist kommunikationstechnisch an die elektronische Schaltung der erfindungsgemäßen Vorrichtung angeschlossen. Dabei weist die Signaleingabeeinheit so viele Funktionstasten auf, wie sie für die Steuerung der Spielfunktonen insgesamt erforderlich sind, wobei bei PC-Spielen in der Regel fünf Funktionstasten und bei Konsolen-Spielen bis zu neun Funktionstasten benötigt werden. Mit den Funktionstasten werden die übrigen Funktionen eines Video- oder PC-Spieles gesteuert, wie beispielsweise Lenk-, Brems- und Schaltfunktionen.

Durch die kombinierte Verwendung des am Heimtrainers vorgesehenen Signalgebers einerseits und der zur Steuerung der übrigen Funktionen des Videooder PC-Spiels vorgesehenen Signaleingabeeinheit andererseis wird das Videooder PC-Spiel im Hinblick auf die Geschwindigkeitssteuerung durch die vom Spieler aufgebrachte Energie direkt gesteuert, wobei sich eine Relation zwischen dem Arbeitseinsatz des Spielers auf der einen Seite und der im Spiel erreichten Geschwindigkeit andererseits einstellt.

Mit Vorteil erlaubt es die erfindungsgemäße Vorrichtung, zwei bereits vorhandene Komponenten, beispielsweise auf der einen Seite einen Heimtrainer und auf der anderen Seite eine Video-Spielkonsole oder einen PC, die in dieser Form bisher nicht miteinander kommuniziert haben, kommunikationstechnisch miteinander zu verbinden, womit die Nutzung beider vorgenannten Komponenten insgesamt attraktiver wird. Der Mensch, das heißt der Spieler, wird über eine einfache und kostengünstige Variante mit seiner eigenen Bewegung aktiv in das Video- oder PC-Spiel eingebunden. Dadurch, daß gleichzeitig mit dem Training auf dem Heimtrainer auch auf Anforderungen des Spiels reagiert werden muß, zum Beispiel durch Lenken, Springen, Bremsen oder Erfüllen von Missionen, wird spielerisch ein ganzheitliches Training für den Körper und Geist erreicht. Durch die Konzentration auf das Spiel wird die Motivation für ein Training gesteigert und gegebenenfalls vorhandener Erfolgsdruck kann in positive Energie umgewandelt werden. Wenn, wie beim Training auf dem Heimtrainer häufig, Langeweile durch Gewöhnung einsetzt, kann durch ein neues Spiel wieder neues Interesse geweckt werden. Damit kann eine längere Nutzung und ein regelmäßigeres Training und damit verbunden ein besseres physisches Ergebnis erreicht werden. Die Investition zur Anschaffung eines Heimtrainers für den privaten Bereich wird dadurch für den Einzelnen attraktiver.

Da die Funktionen der Ursprungskomponenten, das heißt des Heimtrainers und der Spielekonsole oder des PC's nicht verändert werden, können bereits vorhandene oder in Zukunft für PC oder Videospiel-Konsole entwickelte Spiele verwendet werden, ohne daß dazu eine spezielle Programmierung erforderlich wäre. Dazu können auch Spiele als virtuelle Realitäten erlebt werden, die dafür ursprünglich gar nicht programmiert worden sind.

Durch die Möglichkeit, die eine Videospiel-Konsole oder ein PC für die gleichzeitige Nutzung eines Spiels durch mehrere Spieler bietet, kann auch ein gemeinschaftliches Training auf dem Heimtrainer aufgenommen werden. Damit bieten sich auch neue Einsatzmöglichkeiten für private und gewerbliche Nutzung.

Angeordnet sind gemäß einem weiteren Merkmal der Erfindung die Signaleingabeeinheit bzw. die Signaleingabeeinheiten innerhalb eines dafür vorgesehenen Gehäuses, wobei jede Signaleingabeeinheit einem jeweils zugehörigen Gehäuse zugeordnet ist. Die erfindungsgemäß vorgesehene elektronische Schaltung ist gleichfalls im Gehäuse für die Signaleingabeeinheit angeordnet, wobei für den Fall, daß mehrere Signaleingabeeinheiten, das heißt mehrere Gehäuse vorgesehen sind, die elektronische Schaltung in einem dieser Gehäuse untergebracht ist. Kommunikationstechnisch verbunden ist die elektronische Schaltung entweder mittels Funk oder mittels Kabel mit dem Signalgeber, beispielsweise dem Heimtrainer. Für den Fall, daß ein solcher Anschluß mittels Kabel erfolgt, kann dieses als Zweipolanschlußkabel ausgebildet sein, das auf Seiten des Heimtrainers mit einem zweipoligen Klinkenstecker versehen ist. Zur Anbindung der erfindungsgemäßen Vorrichtung an einen Signalempfänger, beispielsweise eine Videospiel-Konsole oder ein PC, ist ein entsprechender Anschlußstecker vorgesehen, der je nach verwendetem Signalempänger entsprechend ausgebildet ist. Auch diese Verbindung, das heißt die kommunikationstechnische Verbindung zwischen erfindungsgemäßer Vorrichtung und dem Signalempfänger kann alternativ auch mittels Funk ausgebildet sein. Die einzelnen verwendeten Signaleingabeeinheiten sind gleichfalls entweder mittels einer Kabelanordnung oder mittels Funk kommunikationstechnisch miteinander verbunden.

Gemäß einem weiteren Merkmal der Erfindung weisen die jeweils zur Aufnahme der Signaleingabeeinheiten vorgesehenen Gehäuse eine Befestigungseinrichtung auf, die beispielsweise als Klemmschelle ausgebildet sein kann, und der Anordnung insbesondere am Heimtrainer dient. Von Vorteil ist hierbei, daß die Befestigungseinrichtung dazu genutzt werden kann, die Signaleingabeeinheiten bedarfsgerecht am Heimtrainer dort anzuordnen, die der Spieler für eine komfortable Bedienung bevorzugt. Gehäuse und Klemmschelle können dabei gemäß einem weiteren Merkmal der Erfindung aus Kunststoff gebildet sein. Selbstverständlich eignen sich hier auch andere Materialien, wie beispielsweise Metall oder Metallegierungen.

Insgesamt wird mit der erfindungsgemäßen Vorrichtung eine Schnittstelle zur Verfügung gestellt, mit der insbesondere die nachfolgenden Vorteile verwirklicht werden:

- einfache Montage am Heimtrainer,

- externes, unabhängiges Gerät, nach dessen Demontage sowohl der Heimtrainer als auch der PC oder die Videospiel-Konsole wieder allein einsatzfähig sind,

- kostengünstig und für den Heimbereich geeignet,

- Betrieb ohne eigene Stromversorgung,

- universal anschließbar an alle gängigen Typen von Heimtrainern, die Trainingscomputer unterstützen und

- spieleunabhängig.

Gemäß einem weiteren vorteilhaften Vorschlag der Erfindung ist vorgesehen, dass die Vorrichtung eine separat angeordnete und an den Signalgeber, die Signaleinheit und den Signalempfänger kommunikationstechnisch angeschlossene Schaltelektronik aufweist, mittels der die Signale des Signalgebers und der Signaleingabeeinheit in die vom Signalempfänger geforderte Signalstruktur überführbar sind, wobei als Signalempfänger ein PC oder eine Videospiel-Konsole vorgesehen ist. Von besonderem Vorteil dieser Ausgestaltung ist die separate Anordnung der Schaltelektronik. Erlaubt wird hierdurch eine austauschbare Anordnung, so dass durch einfachen Wechsel der Schaltelektronik ein und derselbe Heimtrainer mit unterschiedlichen Signalempfängern kombiniert werden kann. Je nach verwendetem Signalempfänger bedarf es nämlich einer entsprechenden Signalmodulation durch die Schaltelektronik, so dass es in Abhängigkeit des vom Anwender wunschgemäß zu verwendenden Signalempfängers der Verwendung einer hierauf abgestimmten Schaltelektronik bedarf. Durch die separate Anordnung der Schaltelektronik wird ein einfacher Austausch ermöglicht, womit dem Anwender die Wahl bleibt, den Heimtrainer unter Verwendung der entsprechenden Schaltelektronik mit einer Videospiel-Konsole oder einem PC seiner Wahl zu verbinden. Auch ermpöglicht die separate Anordnung der Schaltelektronik eine herstellerseitig vorgesehene integrative Anordnung von Signaleingabeeinheiten am Heimtrainer, denn wird erst durch die Zwischenschaltung einer entsprechenden Schaltelektronik die kommunikationstechnische Verbindung zwischen den Signaleingabeeinheiten und dem Signalempfänger hergestellt.

Für die Eingabe weiterer Steuerbefehle zur Steuerung des auf dem an den Heimtrainer angeschlossenen PC bzw. auf der an den Heimtrainer angeschlossenen Videospiel-Konsole ablaufenden Spiels ist mit der erfindungsgemäßen Vorrichtung zumindest eine weitere manuell betätigbare Signaleingabeeinheit vorgesehen, die zusammen mit dem Signalgeber an die erfindungsgemäße Schaltelektronik kommunikationstechnisch angeschlossen ist. Eine solche Signaleingabeeinheit dient beispielsweise dazu, zusätzliche Steuerbefehle wie beispielsweise vor und zurück, links und rechts, auf und ab oder dergleichen an den PC bzw. die Videospiel-Konsole zu übertragen. Die erfindungsgemäße Kombination von manuell zu bedienender Signaleingabeeinheit auf der einen Seite und Signalgeber auf der anderen Seite ermöglicht es dem Spieler, zumindest ein Steuersignal aufgrund seiner sportlichen Leistung durch interaktive Ankopplung an das PC- oder Videospiel zu erbringen, wohingegen die übrigen zur Bedienung des PC- oder Videospiels erforderlichen Steuerbefehle über die manuell zu bedienende Signaleingabeeinheit angewählt werden. Beispielshaft sei in diesem Zusammenhang ein Heimtrainer-Fahrrad genannt, welches über die erfindungsgemäße Vorrichtung an ein PC- oder Videospiel angeschlossen ist, welches ein Fahrzeugrennen beliebiger Art, beispielsweise mit Schiffen, Landfahrzeugen, Flugzeugen oder dergleichen zeigt. Über das Heimtrainer-Fahrrad kann der Spieler die Geschwindigkeit des im PC- oder Videospiels abgebildeten Fahrzeuges steuern, wobei zur Erhöhung der Geschwindigkeit im Spiel ein stärkeres "in die Pedale treten" auf dem Heimtrainer-Fahrrad erforderlich ist. Zur Verlangsamung der Geschwindigkeit ist lediglich ein weniger starkes "in die Pedale treten" erforderlich. Interaktiv in das PC- oder Videospiel eingebunden kann der Spieler mithin über seine sportliche Aktivität auf dem Heimtrainer-Fahrrad direkt die Geschwindigkeit der im PC- oder Videospiel abgebildeten Figur bzw. des abgebildeten Fahrzeuges regulieren, das heißt steuern. Die übrigen Steuerbefehle für die spielegerechte Lenkung der Figur oder des Fahrzeuges erfolgt über beispielsweise zwei manuell zu bedienende Signaleingabeeinheiten, die vorzugsweise handgerecht ausgebildet am Lenker des Heimtrainer-Fahrrades angeordnet sind. In normaler Sitzhaltung auf dem Heimtrainer-Fahrrad kann es so dem Spieler bzw. Anwender ermöglicht werden, die Funktionstasten der beiden Signaleingabeeinheiten leicht zu erfassen und auf diese Weise bequem Befehle durch Anwahl der entsprechenden Funktionstasten auszuführen. Vorgesehen sein kann dabei, daß die Signaleingabeeinheiten nachrüstbar ausgestaltet und nur im Bedarfsfall an den Lenker des Heimtrainer-Fahrrades angeordnet werden. Vorgesehen sein kann aber auch die integrative Ausgestaltung der Signaleingabeeinheiten, das heißt eine bereits herstellerseitige Anordnung der Signaleingabeeinheiten, die vorzugsweise in der Kontur des Lenkers des Heimtrainer-Fahrrades integriert sind und nachträglich durch den Anwender bzw. Spieler nicht mehr gelöst werden können. Die als zweites genannte Alternative ist dabei insbesondere dann von Vorteil, wenn ein Heimtrainer-Fahrrad von vornherein unter dem Gesichtspunkt der gewünschten Ankopplung an einen PC oder eine Videospiel-Konsole erworben wird. Die zuerst genannte Alternative ist hingegen dann von Vorteil, wenn bereits im Besitz eines Anwenders bzw. Spielers vorhandene Heimtrainer nachgerüstet und somit im nachhinein für eine kommunikationstechnische Anbindung an einen PC oder eine Videospiel-Konsole ausgelegt werden sollen.

Für die Überführung, das heißt die Modellierung der vom Signalgeber einerseits und der Signaleingabeeinheit andererseits gelieferten Signale in eine vom angeschlossenen PC oder der angeschlossenen Videospiel-Konsole lesbaren, das heißt interpretierbaren Signalstruktur ist mit der erfindungsgemäßen Vorrichtung die zwischen Signalgeber und Signaleingabeeinheit auf der einen Seite und dem Signalempfänger auf der anderen Seite zwischengeordnete Schaltelektronik vorgesehen. Diese dient der Überführung der eingabeseitig erfolgten Signale in die empfangsseitig geforderte Signalform, so daß die mittels des Signalgebers und der Signaleingabeeinheit vom Spieler übermittelten Signale in entsprechende Befehle für das auf dem angeschlossenen PC oder der angeschlossenen Videospiel-Konsole ablaufende PC- oder Videospiel umgesetzt werden. Zu beachten ist hierbei, daß die gängigen auf dem Markt erhältlichen Videospiel-Konsolen zueinander nicht kompatibel sind, und zwar sowohl im Hinblick auf die verwendete interne Elektronik als auch bezüglich der anschließbaren Peripheriegeräte, wie beispielsweise Joysticks, Lenkräder, Gamepads, Controller oder dergleichen. Selbiges gilt im übrigen auch für PC's, die weder zueinander noch zu den vorgenannten Videospiel-Konsolen kompatibel sind. Als gängige Videospiel-Konsolen seien in diesem Zusammenhang die X-Box von Microsoft, der Game Cube von Nintendo und die Playstation von Sony genannt. Je nach dem, welche Art von PC bzw. welche Art von Videospiel-Konsole an den Heimtrainer anzuschließen ist, ist für eine kompatible kommunikationstechnische Anbindung von Signalgeber und Signaleingabeeinheit an den Signalempfänger, das heißt den PC oder die Videospiel-Konsole, eine entsprechende Schaltelektronik vorzusehen. Von besonderem Vorteil ist hierbei gemäß der erfindungsgemäßen Vorrichtung, daß es nicht etwa erforderlich wäre, Signaleingabeeinheit bzw. Signalgeber auszutauschen, sondern daß es lediglich erforderlich ist, mit Blick auf den jeweils an den Heimtrainer anzuschließenden Signalempfänger eine entsprechende Schaltelektronik auszusuchen und diese zur kommunikationstechnischen Verbindung von Signalgeber und Signaleingabeeinheit einerseits und Signalempfänger andererseits zwischen diese Komponenten kommunikationstechnisch zwischenzuschalten. Diese Art der Ausgestaltung eröffnet somit in besonderer Weise den Vorteil, Heimtrainer einerseits und Signalempfänger andererseits beliebig miteinander zu kombinieren. Der Anwender hat lediglich darauf zu achten, daß er für den Anschluß des Heimtrainers an seinen PC oder seine Videospiel-Konsole die für seinen PC oder seine Videospiel-Konsole korrespondierend ausgebildete Schaltelektronik für eine kommunikationstechnische Verbindung von Heimtrainer und Signalempfänger aussucht und entsprechend anschließt.

Von Vorteil ist in diesem Zusammenhang ferner, daß erfindungsgemäß vorgesehen ist, die Schaltelektronik separat in einem dafür vorgesehenen Gehäuse anzuordnen. Auf einfache Weise kann so nämlich eine Ankopplung des Heimtrainers an einen beliebigen Signalempfänger durchgeführt werden, sei es, daß eine solche Ankopplung im Rahmen einer Nachrüstung oder bezüglich eines entsprechend bereits vorbereiteten Heimtrainers erfolgt. Werksseitig können nämlich unabhängig vom jeweils anzuschließenden Signalempfänger Montage- bzw. Anordnungsvorbereitungen sowohl hinsichtlich des Signalgebers oder der Signaleingabeeinheit getroffen werden. Da diese unabhängig von dem später anzuschließenden Signalempfänger vorinstalliert bzw. vormontiert werden können, kann hier durch eine kostengünstige Herstellung und für den Spieler montagefreundliche Vorrichtung zur Verfügung gestellt werden. Anwenderseitig ist dann schließlich nur noch die entsprechend seines anzuschließenden Signalempfängers korrespondierend ausgebildete Schaltelektronik zwischenzuschalten, was durch Vorbereitung entsprechender Steckplätze auf Seiten des Heimtrainers auf einfache Weise durchgeführt werden kann. In der Praxis kann beispielsweise vorgesehen sein, daß die Schaltelektronik samt zugehöriger Anschlußverkabelung inklusive Anschlußstecker in einem entsprechend ausgebildeten Gehäuse untergebracht an den Anwender geliefert wird. Die Schaltelektronik ist dabei nach Wunsch des Kunden an den später vom Anwender an den Heimtrainer anzuschließenden Signalempfänger abgestimmt. Für eine kommunikationstechnische Verbindung des Heimtrainers an den Signalempfänger ist es dann anwenderseitig nur noch erforderlich, das die Elektronik tragende Gehäuse in eine am Heimtrainer dafür vorgesehene Halterung einzubringen und eine kommunikationstechnische Verbindung zwischen der Schaltelektronik und dem Signalempfänger mittels des vorgesehenen Anschlußkabels bzw. des vorgesehenen Anschlußsteckers herzustellen. Als Drittes sind dann schließlich nur noch der Signalgeber und die Signaleingabeeinheit an die Schaltelektronik anzuschließen, wobei dies im Falle einer mittels einer Kabelanordnung herzustellenden kommunikationstechnischen Verbindung durch einfaches Zusammenbringen der seitens des Signalgebers und der Signaleingabeeinheit vorgesehenen Anschlußstecker mit den an der Schaltelektronik vorgesehenen, korrespondierend ausgebildeten Steckerbuchsen erreicht werden kann. Die separate Anordnung der Schaltelektronik ermöglicht somit auf einfache und kostengünstige Weise die kommunikationstechnische Anbindung eines im Hinblick auf die Kompatibilität unabhängigen Signalgebers bzw. einer Signaleingabeeinheit an die vom Spieler bzw. Anwender wunschgemäß an den Heimtrainer anzuschließende Videospiel-Konsole bzw. anzuschließenden PC.

Weitere Vorteile und Merkmale der Erfindung ergeben sich aus der Beschreibung anhand der Figuren. Dabei zeigen:

Fig. 1: eine schematische Darstellung der erfindungsgemäßen Vorrichtung;

Fig. 2: einen Anschlußstecker für einen PC;

Fig. 3: einen Anschlußstecker für eine Spielekonsole;

Fig. 4: einen Anschlußstecker für einen USB-Port;

Fig. 5: in einer Seitenansicht eine Signaleingabeeinheit;

Fig. 6: in einer Draufsicht von oben eine Signaleingabeeinheit;

Fig. 7: einen Schaltplan für die Ansteuerung eines PC's

Fig. 8: einen Schaltplan betreffend die Funktionstasten für die Ansteuerung eines PC's;

Fig. 9 in einer dreidimensionalen Darstellung schematisch die Anwendung der erfindungsgemäßen Vorrichtung im Zusammenhang mit einem Heimtrainer-Fahrrad;

Fig. 10 in einer Draufsicht eine Steuereingabeeinheit der erfindungsgemäßen Vorrichtung und

Fig. 11 in einer Draufsicht ein Gehäuse für die Schaltelektronik gemäß der erfindungsgemäßen Vorrichtung.

Die erfindungsgemäße Vorrichtung ermöglicht die kommunikationstechnische Kopplung von Heimtrainer einerseits und PC bzw. Videospiel-Konsole andererseits, wobei der besondere Reiz dieser kommunikationstechnischen Kopplung darin besteht, daß die vom am Heimtrainer angeschlossenen Signalgeber erfaßten physikalischen Betriebszustände des Heimtrainers dazu genutzt werden können, auf einem PC oder einer Videospiel-Konsole betreibbare Videospiele zumindest zum Teil zu steuern. Die zwischen Heimtrainer und PC bzw. Videospiel-Konsole zwischengeschaltete Elektronik dient dabei der Umwandlung der vom Signalgeber erzeugten Signale in digitale Informationen, die vom PC bzw. der Videospiel-Konsole verarbeitet werden können.

Handelsübliche und bekannte Videospiel-Konsolen sind die X-Box von Microsoft, der Game Cube von Nintendo und die Playstation von Sony. All diesen Videospiel-Konsolen ist gemein, daß die auf ihnen laufenden Spiele mittels eines Steuergeräts, beispielsweise eines Joysticks, eines Lenkrads, eines Gamepads oder eines Controllers, gespielt werden. Typische Funktionen, die hierbei von einem Steuergerät übernommen werden, sind Steuerbefehle wie vor und zurück, links und rechts, hoch und runter, beschleunigen und bremsen. Die erfindungsgemäße Vorrichtung ermöglicht es nunmehr, einige oder mehrere dieser Steuerfunktionen nicht mittels einem dafür vorgesehenen Steuergerät sondern mittels eines an den PC oder die Videospiel-Konsole angeschlossenen Heimtrainers durchzuführen. Ermöglicht wird hierdurch nicht nur eine interaktive Einbindung des Spielers in das von ihm zu spielende Spiel, auch wird eine deutliche Motivationssteigerung hinsichtlich der Benutzung des Heimtrainers erzielt.

Eine Steuerfunktion, die beispielsweise mittels des Heimtrainers ausgeführt werden kann, ist die Steuerung der Geschwindigkeit eines in einem Video- oder PC-Spiel virtuell dargestellten Fahrzeuges. Dieses Fahrzeug beschleunigt und erhält eine Geschwindigkeit entsprechend der auf dem Heimtrainer vom jeweiligen Spieler erbrachten körperlichen Leistung. Je schneller beispielsweise ein auf einem Heimtrainer-Fahrrad sitzender Spieler "in die Pedale" tritt, desto schneller bewegt sich das im Spiel abgebildete Fahrzeug oder die im Spiel abgebildete Figur. Es erfolgt somit über die Kopplung Heimtrainer - PC bzw. Videospiel-Konsole eine interaktive Einbindung des Spielers in das Videospiel, so daß es nicht nur auf geistiges Geschick, sondern auch auf sportliche Aktivität seitens des Spielers ankommt.

Die vom Signalgeber zur Steuerung der Geschwindigkeit bereitgestellten Signale entstammen vorzugsweise der Meßeinrichtung des Heimtrainers selbst. So ist beispielsweise bei handelsüblichen Heimtrainer-Fahrrädern zur Messung der momentanen Trittgeschwindigkeit ein Geschwindigkeitssensor vorgesehen, der die Geschwindigkeit erfaßt und auf einem dafür vorgesehenen Display anzeigt. Dieses Signal, das beispielsweise über ein zweiadriges Kabel von der Geschwindigkeitsmeßeinrichtung zur Displayanzeige übertragen wird, kann über eine entsprechende Weichenanordnung abgezweigt und der erfindungsgemäß vorgesehenen Schaltelektronik zugeführt werden. Die von der Meßelektronik des Heimtrainers erfaßten physikalischen Betriebszustände, beispielsweise über die Geschwindigkeit, die Beschleunigung oder dergleichen, können so auf einfache und vor allem kostengünstige Weise durch Signalumwandlung innerhalb der erfindungsgemäß vorgesehenen Schaltelektronik für den als Signalempfänger vorgesehenen PC oder die als Signalempfänger vorgesehen Videospiel-Konsole zur Verfügung gestellt werden. Wird für die Abzweigung des von der Meßeinrichtung des Heimtrainers erfaßten Meßsignals eine Y-Weiche verwendet, so ist es zudem möglich, dieses Signal nicht nur dem Signalempfänger, sondern auch weiterhin der am Heimtrainer vorgesehenen Displayanzeige zuzuführen.

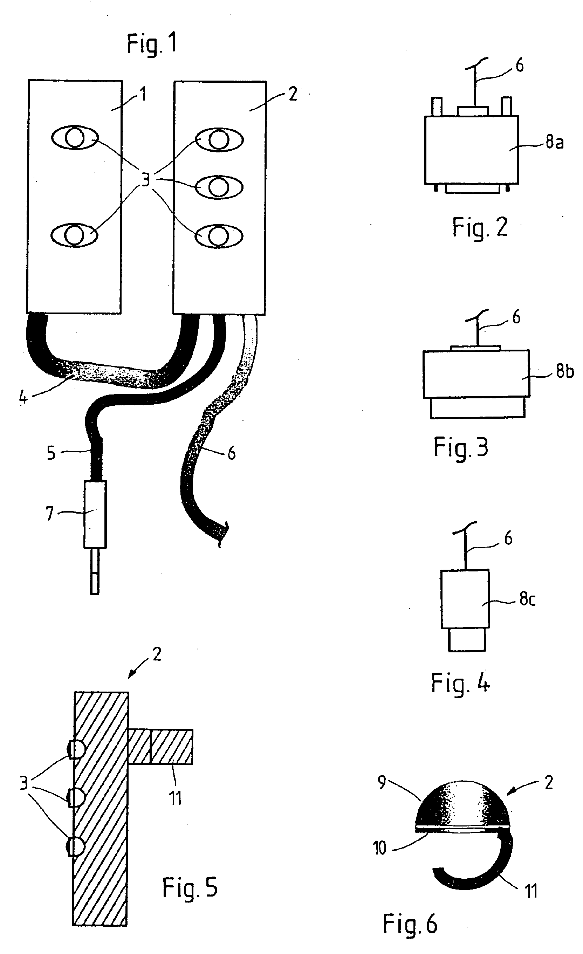

Fig. 1 zeigt in schematischer Darstellung den Aufbau der erfindungsgemäßen Vorrichtung. Vorgesehen sind zwei Gehäuse 1 und 2, die jeweils eine nicht näher dargestellte Signaleingabeeinheit aufnehmen. Gebildet sind die beiden Gehäuse 1 und 2 jeweils durch eine Gehäuseoberseite 9 und eine Basisplatte 10, was insbesondere Fig. 6 entnommen werden kann. Auf ihrer Oberseite verfügen die beiden Gehäuse 1 und 2 jeweils über Funktionstasten 3, wobei das in Fig. 1 gezeigte linke Gehäuse 1 zwei Funktionstasten und das rechte Gehäuse 2 drei Funktionstasten aufweist. Kommunikationstechnisch miteinander verbunden sind die innerhalb der Gehäuse 1 und 2 angeordneten Signaleingabeeinheiten durch ein Kabel 4.

Innerhalb des Gehäuses 2 ist zudem eine in der Fig. nicht näher dargestellte elektronische Schaltung angeordnet, die einerseits über ein Anschlußkabel 5 und einen Klinkenstecker 7 an einen Signalgeber, beispielsweise einen Heimtrainer, und andererseits über das Anschlußkabel 6 und einen entsprechend zugehörigen Stecker 8a bis 8c an einen Signalempfänger, beispielsweise einen PC, angeschlossen ist. Mögliche Anschlußstecker 8a bis 8c zeigen die Fign. 2, 3 und 4, wobei 8a einen Stecker für einen PC, 8b einen PSX-Stecker für eine Spielekonsole und 8c einen USB-Stecker bezeichnet.

Über den Klinkenstecker 7 und das Kabel 5 werden die vom Heimtrainer gelieferten Signale, beispielsweise über die Geschwindigkeit, der im Gehäuse 2 angeordneten elektronischen Schaltung zugeführt. Zudem erhält die elektronische Schaltung Signale von den in den Gehäusen 1 und 2 angeordneten Signaleingabeeinheiten, die über die Funktionstasten 3 vom Spieler angesteuert werden. Sowohl die Signale vom Heimtrainer als auch die von den Signaleinheiten zur Verfügung gestellten Signale werden von der elektronischen Schaltung zusammengeführt und dergestalt moduliert, daß sie vom angeschlossenen Signalempfänger umgesetzt werden können. Für einen Anschluß der erfindungsgemäßen Vorrichtung an eine Videospiel-Konsole oder einen PC sind die schon beschriebenen Stecker 8a bis 8c vorgesehen.

In vorteilhafter Weise kann die erfindungsgemäße Vorrichtung an unterschiedliche Signalempfänger angeschlossen werden, so daß eine Kombination der erfindungsgemäßen Vorrichtung sowohl mit einem PC als auch mit einer Spiel-Konsole möglich ist. Lediglich ist es erforderlich, in Abhängigkeit des anzuschließenden Signalempfängers einen entsprechenden Anschlußstecker 8a bis 8c sowie eine entsprechende elektronische Schaltung vorzusehen.

Fig. 5 zeigt in einer Seitenansicht das Gehäuse 2. Gut zu erkennen sind hier die über die Oberfläche der Gehäuseoberseite 9 hinausragenden Funktionstasten 3. Auf diese Weise wird eine gute Erreichbarkeit sowie eine gute Betätigungsmöglichkeit der Funktionstasten 3 ermöglicht. Zu erkennen ist in Fig. 5 des weiteren die als Befestigungseinrichung dienende Schelle 11, die auf der den Funktionstasten abgewandten Rückseite des Gehäuses 2 angeordnet ist. Die Ausgestaltung der Schelle 11 kann gleichfalls Fig. 6 entnommen werden. Zu erkennen ist hier, daß die Schelle 11 kreisbogenförmig ausgebildet ist und in der Funktion der eines Clips entspricht. Angeordnet ist die Schelle 11 dabei an der Basisplatte 10, so daß für eine insbesonders wirtschaftliche Ausgestaltung des Gehäuses 2 Basisplatte 10 und Schelle 11 einstückig ausgebildet werden können.

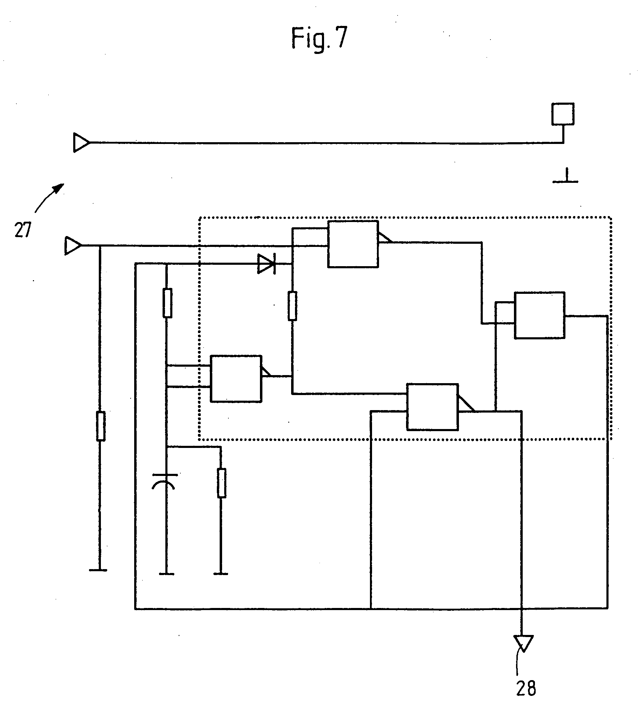

Fig. 7 zeigt in schematischer Darstellung einen Schaltplan zur Ansteuerung eines PC's. 27 bezeichnet hierbei den Signaleingang und 28 den Signalausgang.

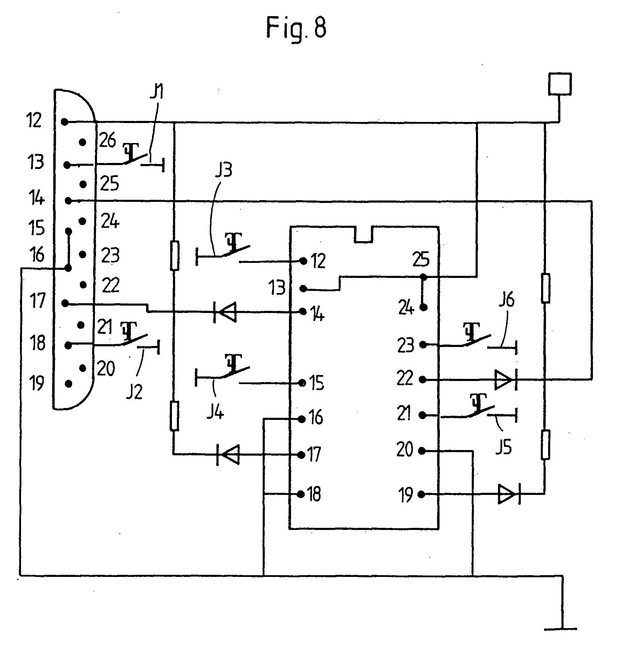

Fig. 8 zeigt in einer schematischen Schaltdarstellung die Funktionstastenbelegung bei der Verwendung von fünf Funktionstasten, wie dies beispielsweise bei dem Anschluß an einen als Signalempfänger dienenden PC der Fall ist. Für die Belegung der Pins 1 - 25 ergibt sich dabei die folgende Konstellation:

| | |
|---|---|
| Pin 1 (Bezugszeichen 12) | + 5 V |
| Pin 2 (Bezugszeichen 13) | button 1 |
| Pin 3 (Bezugszeichen 14) | Joystick X1 |
| Pin 4 (Bezugszeichen 15) | GND |
| Pin 5 (Bezugszeichen 16) | GND |
| Pin 6 (Bezugszeichen 17) | Joystick Y1 |
| Pin 7 (Bezugszeichen 18) | button 2 |
| Pin 8 (Bezugszeichen 19) | + 5 V |
| Pin 9 (Bezugszeichen 20) | + 5 V |
| Pin 15 (Bezugszeichen 21) | + 5 V |
| Pin 10 (Bezugszeichen 22) | button 4 |
| Pin 11 (Bezugszeichen 23) | Joystick X2 |
| Pin 12 (Bezugszeichen 24) | GND |
| Pin 13 (Bezugszeichen 25) | Joystick Y2 |
| Pin 14 (Bezugszeichen 26) | button 3 |

Mit Bezug auf die in Fig. 8 dargestellte Verschaltung ergibt sich somit folgender Zusammenhang:

J1 = button 1

J2 = button 2

J3 = vorwärts

J4 = zurück

J5 = rechts

J6 = links.

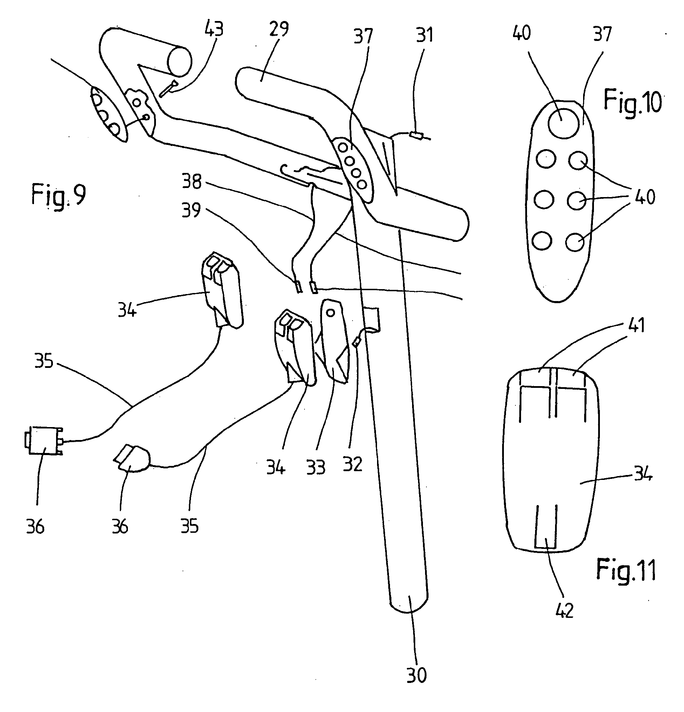

Fig. 9 zeigt in einer perspektivischen Darstellung den Lenker 29 eines im weiteren nicht näher dargestellten Heimtrainer-Fahrrades. Der Lenker 29 ist an einem Halter 30 angeordnet und kann vorzugsweise gegenüber diesem in seiner Höhe verstellt werden. Der Halter 30 ist seinerseits an den Korpus des in der Fig. nicht näher dargestellten Heimtrainer-Fahrrades angeschlossen.

Zur Erfassung der im Zuge eines Trainingsprogramms auf dem Heimtrainer-Fahrrad erreichten sportlichen Leistungen, wie beispielsweise Geschwindigkeit oder Beschleunigung, ist das Heimtrainer-Fahrrad mit einem Geschwindigkeitssensor ausgestattet, der beispielsweise über eine Magnetanordnung am Schwungrad des Heimtrainer-Fahrrades die Geschwindigkeit erfaßt. Zur Anzeige dieser erzielten sportlichen Leistungen ist ein in dieser Fig. nicht näher dargestelltes Anzeigendisplay vorgesehen, welches über ein im hohl ausgestalteten Halter 30 verlegtes Kabel und den Klinkenstecker 31 an die Meßeinrichtung des Heimtrainer-Fahrrades angeschlossen ist. Dieses Signal wird über eine im dem Halter 30 angeordnete Weichenanordnung abgezweigt und über ein weiteres Kabel, welches endseitig mit einem Stecker 32 versehen ist, der erfindungsgemäß vorgesehenen Schaltelektronik, welche im Gehäuse 34 untergebracht ist, zugeführt. Die im Heimtrainer-Fahrrad vorgesehene Meßeinrichtung dient somit als Signalgeber für die Schaltelektronik der erfindungsgemäßen Vorrichtung.

Am Lenker 29 angeordnet sind zudem zwei Steuereingabeeinheiten 37 vorgesehen, wobei eine Steuereingabeeinheit 37 jeweils an einem Lenkerarm des Lenkers 29 angeschlossen ist. Bei der in dieser Fig. dargestellten Ausführungsform sind die Steuereingabeeinheiten 37 dauerhaft am Lenker 29 angeordnet und mittels entsprechender Befestigungsschrauben 43 unverrutschbar an diesem befestigt. Alternativ kann auch vorgesehen sein, die Steuereingabeeinheiten 37 als Nachrüstset auszubilden, die dann nicht dauerhaft am Lenker 29 sondern nur temporär an diesem vom Anwender befestigt werden können.

Die Steuereingabeeinheit 37, die im Detail näher in Fig. 10 gezeigt ist, verfügt über Funktionstasten 40, über die der Anwender bzw. Spieler entsprechend der Funktionstastenbelegung Steuerbefehle anwählen und als entsprechende Steuersignale über die in diesem Ausführungsbeispiel innerhalb des Lenkers 29 verlegten Verbindungskabel 38 und zugehöriger Verbindungsstecker 39 an die im Gehäuse 34 angeordnete Steuerelektronik übertragen kann.

Für eine kommunikationstechnische Verbindung von der innerhalb im Gehäuse 34 angeordneten Schaltelektronik einerseits und den Steuereingabeeinheiten 37 andererseits weist das Gehäuse 34 korrespondierend zu den Steckern 39 ausgebildete Buchsen 41 auf, wie insbesondere der Darstellung nach Fig. 11 entnommen werden kann. Seitens des Anwenders sind für die Ausbildung einer kommunikationstechnischen Verbindung zwischen Schaltelektronik und Steuereingabeeinheiten 37 lediglich die Verbindungsstecker 39 in die dafür vorgesehenen Buchsen 41 des Gehäuses 34 einzuführen. Hinsichtlich der kommunikationstechnischen Verbindung der Schaltelektronik mit der Meßeinrichtung, das heißt dem Signalgeber, gilt entsprechendes. Auch hier ist für eine Ankopplung lediglich der Stecker 32 in eine dafür im Gehäuse 34 vorgesehene Buchse, die in der Fig. nicht näher dargestellt ist, einzuführen. Sobald dies erfolgt ist, sind die Steuereingabeeinheiten 37, die als Signalgeber dienende Meßelektronik des Heimtrainers und die im Gehäuse 34 angeordnete Schaltelektronik kommunikationstechnisch miteinander verbunden.

Für eine separate Anordnung der Schaltelektronik ist diese in einem korrespondierend ausgebildeten Gehäuse 34 angeordnet, das mittels einer Grundplatte 33 auswechselbar am Halter 30 des Heimtrainers anordbar ist. Es sei hinsichtlich der kommunikationstechnischen Verbindung von Schaltelektronik und Signalgeber an dieser Stelle auf eine alternative Ausgestaltungsform hingewiesen. Vorgesehen kann nämlich sein, daß der an den Signalgeber angeschlossene Stecker 32 für eine kommunikationstechnische Verbindung mit der Schaltelektronik an die Grundplatte 33 angeschlossen ist, die ihrerseits auf der dem Gehäuse 34 zugewandten Seite über steckergleiche Polanordnungen verfügt, die in korrespondierend am Gehäuse 34 ausgebildete Kontakte eingreifen, sobald das Gehäuse 34 in die Grundplatte 33 eingeführt wird. Diese alternative Ausgestaltungsform stellt gegenüber dem Vorbeschriebenen eine nochmals vereinfachte Montage dar.

Zur Ankopplung der Schaltelektronik an einen in den Fign. nicht dargestellten Signalempfänger, beispielsweise einen PC oder eine Videospiel-Konsole, dient das Anschlußkabel 35 samt zugehörigem Anschlußstecker 36. Dargestellt sind in diesem Zusammenhang in Fig. 9 zwei unterschiedliche Gehäuse-Anschlußkabel-Anschlußstecker-Anordnungen. Diese beiden unterschiedlichen Ausgestaltungsformen dienen jeweils der Ankopplung des Signalgebers und der Steuereingabeeinheiten 37 an unterschiedliche Signalempfänger. Zu unterscheiden sind dabei die unterschiedlichen Anordnungen am jeweils verwendeten Anschlußstecker 36. Der eine Anschlußstecker 36 dient der Ankopplung an einen PC, wohingegen der andere Anschlußstecker 36 der Ankopplung an eine Spielkonsole dient. Dementsprechend unterscheiden sich jeweils auch die beiden in den Gehäusen 34 untergebrachten Schaltelektroniken.

So ist die eine Schaltelektronik für die Ankopplung an einen PC und die andere Schaltelektronik entsprechend für die Ankopplung an eine Videospiel-Konsole ausgelegt.

Die erfindungsgemäße Vorrichtung dient in vorteilhafter Weise der kommunikationstechnischen Verbindung von Steuereingabeeinheiten 37 und einer als Signalgeber dienenden Meßeinrichtung an eine in den Fign. nicht näher dargestellte Videospiel-Konsole oder an einen PC. Von besonderem Vorteil ist dabei der modulare Aufbau, der es ermöglicht, je nach verwendetem PC bzw. je nach verwendeter Videospiel-Konsole die für einen Anschluß erforderliche Schaltelektronik inklusive des zugehörigen Anschlußkabels 35 und des zugehörigen Anschlußsteckers 36 nach Art eines Baukastensystems am Heimtrainer-Fahrrad, vorzugsweise am Halter 30, anzuordnen. Durch diese Art der Anordnung wird die Möglichkeit eröffnet, herstellerseitig den Lenker 29 samt Halter 30 sowie der zugehörigen Steuereingabeeinheiten 37 und der für eine kommunikationstechnische Verbindung notwendigerweise vorzusehenden Kabel und Stecker als eine Baugruppe vorzumontieren, wobei diese Baugruppe in vorteilhafter Weise im Hinblick auf die Kompatibilität des später anzuschließenden Signalempfängers völlig unabhängig ist. Erst mit der separat vorzusehenden Anordnung der im Gehäuse 34 vorgesehenen Schaltelektronik wird eine auf den anzuschließenden Signalempfänger abgestimmte Kommunikationsverbindung zwischen den einzelnen Baukomponenten hergestellt. Die Anordnung dieses die Schaltelektronik tragenden Gehäuses 34 ist dabei denkbar einfach, da es lediglich erforderlich ist, das Gehäuse 34 in die am Halter 30 vorgesehene Grundplatte 33 einzubringen. An der Grundplatte 33 können für eine einfache Montage beispielsweise Halteclipse vorgesehen sein, so daß das Gehäuse 34 lediglich in die Grundplatte 33 für eine dauerhafte Befestigung einzuclipsen ist. Sobald dies erfolgt ist, sind für eine kommunikationstechnische Verbindung lediglich nur noch die vorbeschriebenen Stecker in die dafür vorgesehenen Buchsen am Gehäuse 34 einzubringen, wobei das Anschlußkabel 35 in die Anschlußbuchse 42 und die Stecker 39 in die Anschlußbuchsen 41 einzuführen sind.

Für eine weitere Reduzierung der Herstell- und Montagekosten ist zudem vorgesehen, die Steuereingabeeinheit 37 symmetrisch auszuführen, so daß diese sowohl linksseitig als auch rechtsseitig am Lenker 29 angeordnet werden kann.

Bezugszeichenliste:

| | |
|---|---|
| 1 | Gehäuse |
| 2 | Gehäuse |
| 3 | Funktionstaste |
| 4 | Kabel |
| 5 | Anschlußkabel |
| 6 | Anschlußkabel |
| 7 | Klinkenstecker |
| 8a bis 8c | Anschlußstecker |
| 9 | Gehäuseoberseite |
| 10 | Basisplatte |
| 11 | Schelle |
| 12 bis 26 | Pin |
| 27 | Eingang |
| 28 | Ausgang |
| 29 | Lenker |
| 30 | Halter |
| 31 | Klinkenstecker |
| 32 | Stecker |
| 33 | Grundplatte |
| 34 | Gehäuse |
| 35 | Anschlußkabel |
| 36 | Anschlußstecker |
| 37 | Steuereingabeeinheit |
| 38 | Verbindungskabel |
| 39 | Verbindungsstecker |
| 40 | Funktionstaste |
| 41 | Buchse |
| 42 | Buchse |
| 43 | Schraube |

**Patentansprüche**

1. Vorrichtung zur Signalübertragung von einem physikalische Betriebszustände erfassenden Signalgeber zu einem hiervon separat angeordneten Signalempfänger,

**gekennzeichnet durch**

eine elektronische Schaltung, die an den Signalgeber einerseits und den Signalempfänger andererseits angeschlossen ist und mittels der die vom Signalgeber erzeugten Signale in die vom Signalempfänger geforderte Signalstruktur überführbar sind, wobei der Signalgeber zur Erfassung mindestens eines physikalischen Betriebszustandes an einem Heimtrainer angeschlossen ist und wobei als Signalempfänger ein PC oder eine Videospiel-Konsole vorgesehen ist.

2. Vorrichtung nach Anspruch 1, **dadurch gekennzeichnet, daß** der Signalgeber integraler Bestandteil eines Heimtrainers ist.

3. Vorrichtung nach Anspruch 1 oder Anspruch 2, **dadurch gekennzeichnet, daß** der Signalgeber einen Geschwindigkeitssensor umfaßt.

4. Vorrichtung nach einem der Ansprüche 1 bis 3, **dadurch gekennzeichnet, daß** der Signalgeber, der Signalempfänger und die elektronische Schaltung mittels Kabel und/oder Funk kommunikationstechnisch miteinander in Verbindung stehen.

5. Vorrichtung nach einem der vorhergehenden Ansprüche, **dadurch gekennzeichnet, daß** wenigstens eine zusätzliche Signaleingabeeinheit vorgesehen ist.

6. Vorrichtung nach Anspruch 5, **dadurch gekennzeichnet, daß** die zusätzliche Signaleingabeeinheit kommunikationstechnisch an die elektronische Schaltung angeschlossen ist.

7. Vorrichtung nach einem der Ansprüche 5 oder 6, **dadurch gekennzeichnet, daß** die zusätzliche Signaleingabeeinheit eine Mehrzahl von Funktionstasten aufweist.

8. Vorrichtung nach Anspruch 7, **dadurch gekennzeichnet, daß** die Funktionstasten in Abhängigkeit des angeschlossenen Signalempfängers mit einer entsprechend abgestimmten Signalerzeugung hinterlegt sind.

9. Vorrichtung nach einem der vorhergehenden Ansprüche, **dadurch gekennzeichnet, daß** die vom Signalgeber und von den Signaleingabeeinheiten erzeugten Signale gemeinsam mittels der elektronischen Schaltung verarbeitbar und in Abhängigkeit von der vom jeweils angeschlossenen Signalempfänger geforderten Signalstruktur modulierbar sind.

10. Vorrichtung nach einem der vorhergehenden Ansprüche, **dadurch gekennzeichnet, daß** zwei Signaleingabeeinheiten vorgesehen sind, die jeweils in einem Gehäuse angeordnet sind.

11. Vorrichtung nach einem der vorhergehenden Ansprüche, **dadurch gekennzeichnet, daß** die elektronische Schaltung in einem der Gehäuse für die Signaleingabeeinheit angeordnet ist.

12. Vorrichtung nach einem der vorhergehenden Ansprüche, **dadurch gekennzeichnet, daß** die Gehäuse der Signaleingabeeinheiten auf ihrer den Funktionstasten abgewandten Rückseite eine Befestigungseinrichtung aufweisen.

13. Vorrichtung nach Anspruch 12, **dadurch gekennzeichnet, daß** die Befestigungseinrichtung nach Art einer Klemmschelle ausgebildet ist.

14. Vorrichtung nach einem der Ansprüche 12 oder 13, **dadurch gekennzeichnet, daß** das Gehäuse zweiteilig ausgebildet ist und aus Kunststoff besteht.

15. Vorrichtung nach Anspruch 13 und 14, **dadurch gekennzeichnet, daß** die Unterseite des Gehäuses und die Befestigungseinrichtung einstückig ausgebildet sind.

16. Vorrichtung nach einem der vorhergehenden Ansprüche, **gekennzeichnet durch** eine separat angeordnete und an den Signalgeber, die Signaleingabeeinheit und den Signalempfänger kommunikationstechnisch angeschlossene Schaltelektronik.

17. Vorrichtung nach Anspruch 16, **dadurch gekennzeichnet, daß** für die kommunikationstechnische Verbindung zwischen Schaltelektronik einerseits und Signalempfänger andererseits ein vorzugsweise mehr-poliges Anschlußkabel vorgesehen ist.

18. Vorrichtung nach Anspruch 17, **dadurch gekennzeichnet, daß** das Anschlußkabel auf Seiten des Signalempfängers mit einem zur Anschlußbuchse des Signalempfängers korrespondierend ausgebildeten Anschlußstecker versehen ist.

19. Vorrichtung nach einem der vorhergehenden Ansprüche, **dadurch gekennzeichnet, daß** in Abhängigkeit des an die Vorrichtung anzuschließenden Signalempfängers die entsprechende Schaltelektronik und das zugehörige Anschlußkabel samt Anschlußstecker nach dem Baukastenprinzip miteinander kombinierbar sind.

20. Vorrichtung nach einem der Ansprüche 16, **dadurch gekennzeichnet, daß** der Signalgeber, der Signalempfänger, die Signaleingabeeinheit und die Schaltelektronik mittels Funk kommunikationstechnisch miteinander in Verbindung stehen.

21. Vorrichtung nach Anspruch 20, **dadurch gekennzeichnet, daß** als Funkmodule Bluetooth-Module vorgesehen sind.

22. Vorrichtung nach einem der vorhergehenden Ansprüche, **dadurch gekennzeichnet, daß** das Gehäuse für die Schaltelektronik auswechselbar am Heimtrainer anordbar ist.

Fig. 1

Fig. 2

Fig. 3

Fig. 4

Fig. 5

Fig. 6

# Fig. 7

# Fig. 8

Fig.9

Fig.10

Fig.11

EP 1 336 424 A1

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 5 888 172 A (ARMES RODERICK ET AL) 30. März 1999 (1999-03-30) * das ganze Dokument * --- | 1-10,12, 16-20,22 | A63B24/00 G06F3/00 A63B21/00 |
| X | GB 2 362 331 A (CALLIS STUART BRENTON) 21. November 2001 (2001-11-21) * das ganze Dokument * --- | 1-11,13, 15,17, 18,22 | |
| X | US 6 004 243 A (EWERT BRUCE) 21. Dezember 1999 (1999-12-21) * das ganze Dokument * ----- | 1,3-12, 16-19,22 | |

| | RECHERCHIERTE SACHGEBIETE (Int.Cl.7) |
|---|---|
| | A63B G06F |

Der vorliegende Recherchenbericht wurde für alle Patentansprüche erstellt

| Recherchenort | Abschlußdatum der Recherche | Prüfer |
|---|---|---|
| DEN HAAG | 18. Juni 2003 | Knoflacher, N |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

..............................................................................
& : Mitglied der gleichen Patentfamilie, übereinstimmendes Dokument

EPO FORM 1503 03.82 (P04C03)

**EP 1 336 424 A1**

## ANHANG ZUM EUROPÄISCHEN RECHERCHENBERICHT
## ÜBER DIE EUROPÄISCHE PATENTANMELDUNG NR.

EP 03 00 3091

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

18-06-2003

| Im Recherchenbericht angeführtes Patentdokument | Datum der Veröffentlichung | Mitglied(er) der Patentfamilie | | Datum der Veröffentlichung |
|---|---|---|---|---|
| US 5888172 A | 30-03-1999 | US | 5591104 A | 07-01-1997 |
| | | WO | 9416777 A1 | 04-08-1994 |
| GB 2362331 A | 21-11-2001 | KEINE | | |
| US 6004243 A | 21-12-1999 | AU | 735562 B2 | 12-07-2001 |
| | | AU | 4669197 A | 24-04-1998 |
| | | EP | 1011816 A2 | 28-06-2000 |
| | | WO | 9815112 A2 | 09-04-1998 |
| | | US | 6142913 A | 07-11-2000 |

Für nähere Einzelheiten zu diesem Anhang : siehe Amtsblatt des Europäischen Patentamts, Nr.12/82

EPO FORM P0461